# EUROPÄISCHE PATENTSCHRIFT

(11) **EP 0 302 832 B1**
(45) Veröffentlichungstag und Bekanntmachung des Hinweises auf die Patenterteilung: **20.01.1993**
(21) Anmeldenummer: 88810528.5
(22) Anmeldetag: 29.07.1988
(51) Int. Cl.: C08G 73/12, C08F 283/04, C08F 222/40

(54) **Ungesättigte Imide und Benzaldehyd-Derivate enthaltende heisshärtbare Stoffgemische**
Thermoset compositions containing unsaturated imides and derivatives of benzaldehyde
Compositions thermodurcissables contenant des imides insaturés et des dérivés de benzaldéhyde

(30) Priorität: 07.08.1987 CH 3050/87; 27.10.1987 CH 4204/87
(43) Veröffentlichungstag der Anmeldung: 08.02.1989
(73) Patentinhaber: CIBA-GEIGY AG, 4002 Basel (CH)
(72) Erfinder: Kramer, Andreas, Dr., CH-3186 Düdingen (CH)

(56) Entgegenhaltungen:
- EP-A- 0 175 648
- US-A- 4 016 114
- US-A- 4 377 657
- US-A- 4 608 431

## Beschreibung

Die Erfindung betrifft heisshärtbare Stoffgemische enthaltend bestimmte ungesättigte Imide, z.B. Bismaleinimide, und Benzaldehyd-Derivate, z.B. Dibenzalaceton, deren Verwendung zur Herstellung von vernetzten Formkörpern sowie die daraus erhältlichen Polymere.

Es ist bekannt, dass sich Polymaleinimide mit oder ohne Zusatz von Vernetzungsmitteln, wie Diaminen oder Diolen, durch Erhitzen in vernetzte Produkte überführen lassen [vgl. z.B. US-A-3,562,223, US-A-3,658,764, US-A-3,380,964 und US-A-4,038,251]. Ebenso ist bekannt, dass Polymaleinimide mit bestimmten ungesättigten Verbindungen zu vernetzten Polymeren umgesetzt werden können.

So beschreiben z.B. die GB-A-1,443,067 und die US-A-3,925,314 Stoffgemische enthaltend ungesättigte Bisimide und Azomethine sowie gegebenenfalls Härtungskatalysatoren oder Polyamine.

Die US-A-4,351,932 beschreibt Matrixharze enthaltend ungesättigte Bisimide und Divinylaromaten, wie z.B. Divinylbenzol.

Die GB-A-1,531,906 beschreibt härtbare, für die Herstellung von Schaumstoffen geeignete Gemische, welche ein Bismaleinimid, ein Furfuraldehyd-Derivat und ein Treibmittel enthalten. Die dabei verwendeten Furfuraldehyd-Derivate sind Kondensationsprodukte des Furfuraldehyds mit Mono- oder Diketonen.

Gegenstand vorliegender Erfindung sind heisshärtbare Stoffgemische enthaltend (a) ein ungesättigtes Imid der Formel I 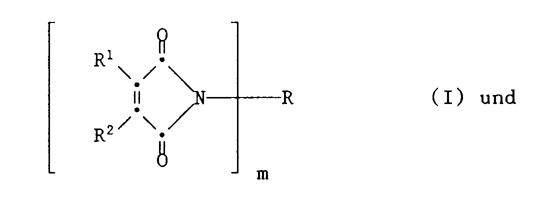
(b) ein Benzaldehyd-Derivat der Formel II 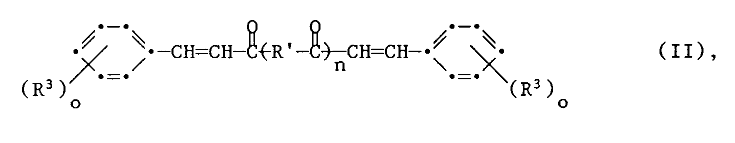
worin m 2 oder 3, n Null oder 1 und o eine ganze Zahl von 1 bis 5 bedeuten,
R¹ und R² unabhängig voneinander Wasserstoff oder Methyl sind,
R -CₚH₂ₚ- mit p = 2-20, -CH₂CH₂SCH₂CH₂-, Arylen mit 6-10 C-Atomen, Xylylen, Cyclopentylen, Cyclohexylen, 1,4-Bis(methylen)cyclohexylen, einen zweiwertigen Rest des Bicyclohexylmethans oder Reste der Formeln 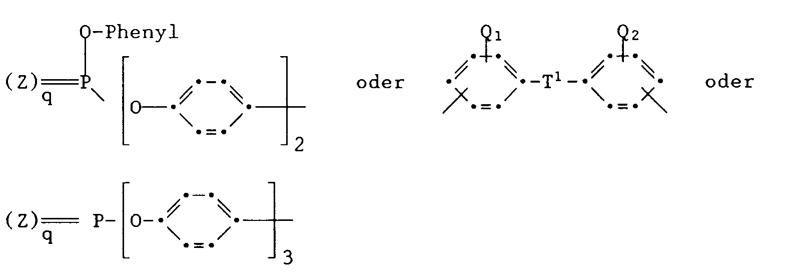
bedeutet, wobei in den obigen Formeln T¹ Methylen, Isopropyliden, CO, O, S, SO₂, -P=O(Q₃), -NQ₃-, -N=N-, -CONH-, -COO-, -NQ₃-CO-X-CO-NQ₃-, -O-CO-X-CO-O-, 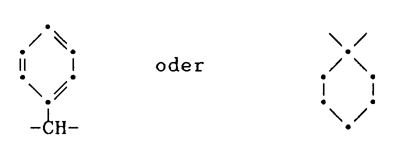
bedeutet,
q 0 oder 1 ist,
Z O oder S darstellt,
Q₁ und Q₂ unabhängig voneinander ein Halogenatom, Methyl, Ethyl oder ein Wasserstoffatom,
Q₃ C₁-C₄-Alkyl und
X eine direkte Bindung, -CₜH₂ₜ- mit t = 1-12, Arylen mit 6-10 C-Atomen, Xylylen, Cyclopentylen oder Cyclohexylen ist,
R' CₖH₂ₖ mir k = 1-20, Cycloalkylen mit 5-10 C-Atomen, Arylen mit 6-10 C-Atomen oder eine Gruppe der Formel III 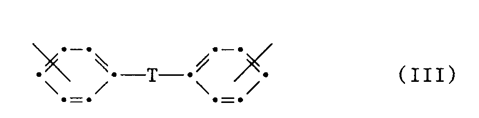
mit T = eine direkte Bindung, Methylen, Isopropyliden, CO, O oder SO₂ und die Substituenten R³ unabhängig voneinander Wasserstoff, Alkyl mit 1-12 C-Atomen, Alkenyl mit 2-6 C-Atomen, Cycloalkyl mit 5-8 C-Atomen, Phenyl, Halogen, eine Nitrogruppe oder eine Gruppe -N(R⁴)₂ oder -OR⁴ bedeuten, wobei die Substituenten R⁴ unabhängig voneinander Wasserstoff, C₁-C₄-Alkyl, C₂-C₄-Alkenyl oder 2,3-Epoxypropyl bedeuten.

Die erfindungsgemässen Stoffgemische eignen sich für die Herstellung von vernetzten Produkten und insbesondere für die Herstellung von Formkörpern, Prepregs, Laminaten, Beschichtungen oder Verklebungen.

Die Substituenten R¹, R² und R³ der Verbindungen der Formeln I und II bedeuten vorzugsweise je ein Wasserstoffatom.

Als spezifische Beispiele für Maleinimide der Formel I, welche in den erfindungsgemässen Mischungen enthalten sein können, seien genannt:
N,N'-Ethylen-bis-maleinimid,
N,N'-Hexamethylen-bis-maleinimid,
N,N'-m-Phenylen-bis-maleinimid,
N,N'-p-Phenylen-bis-maleinimid,
N,N'-4,4'-Diphenylmethan-bis-maleinimid,
N,N'-4,4'-3,3'-Dichlor-diphenylmethan-bis-maleinimid,
N,N'-4,4'-Diphenylether-bis-maleinimid,
N,N'-4,4'-Diphenylsulfon-bis-maleinimid,
N,N'-m-Xylylen-bis-maleinimid,
N,N'-p-Xylylen-bis-maleinimid,
N,N'-4,4'-2,2-Diphenylpropan-bis-maleinimid,
das N,N'-Bis-maleinimid des 4,4'-Diamino-triphenylphosphats,
das N,N'-Bis-maleinimid des 4,4'-Diamino-triphenylphosphits,
das N,N'-Bis-maleinimid des 4,4'-Diamino-triphenylthiophosphats,
das N,N',N''-Trismaleinimid des Tris-(4-aminophenyl)-phosphats,
das N,N',N''-Trismaleinimid des Tris-(4-aminophenyl)-phosphits und
das N,N',N''-Trismaleinimid des Tris-(4-aminophenyl)-thiophosphats.

Als Verbindungen der Formel I sind solche bevorzugt, worin m die Zahl 2, und R -(CH₂)̵ₚ mit p = 2-12, m- oder p-Phenylen, m- oder p-Xylylen, 1,4-Cyclobexylen, 1,4-Bis(methylen)cyclohexylen, den Rest des 4,4'-Bicyclohexylmethans und vor allem einen Rest der Formel IV 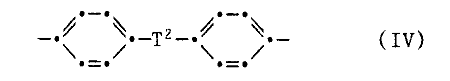
bedeuten, worin T² O, CH₂ oder SO₂ darstellt. Ganz besonders bevorzugt ist das N,N',4,4'-Diphenylmethan-bismaleinimid.

Die Substituenten R³ der Verbindungen der Formel II können unabhängig voneinander eine gerad- oder verzweigtkettige Alkylgruppe mit 1-12 C-Atomen bedeuten, wie Methyl, Ethyl, Isopropyl, n-Butyl, Isopentyl, n-Hexyl, 2-Ethyl-hexyl, n-Decyl und n-Dodecyl, vorzugsweise Alkyl mit 1-8 C-Atomen. R³ in der Bedeutung einer Alkenylgruppe mit 2-6 C-Atomen kann ebenfalls geradkettig oder verzweigt sein, wie Vinyl, Allyl, Methallyl, 2-Butenyl und 3-Hexenyl, vorzugsweise Allyl.

Wenn R³ eine Cycloalkylgruppe bedeutet, kann es sich um eine Cyclopentyl-, Cyclohexyl-, Cycloheptyl- oder Cyclooctylgruppe handeln, vorzugsweise um Cyclohexyl.

Wenn R³ einen Halogenatom bedeutet, kann es sich um Fluor, Jod und vorzugsweise Chlor oder Brom handeln.

Stellt R³ eine Gruppe -N(R⁴)₂ oder -OR⁴ dar, so bedeuten die R⁴ Reste z.B. Methyl, Ethyl, n- und iso-Propyl, n-, iso-, sec.- oder tert.-Butyl, Vinyl, 1- oder 2-Propenyl oder 1-, 2- oder 3-Butenyl.

Stellt R' eine Gruppe -CₖH₂ₖ- dar, so kann es sich um geradkettige oder verzweigte Reste handeln, wie Methylen, Ethylen, Propylen, Trimethylen, Tetramethylen, Hexamethylen, Octamethylen und Dodecamethylen. Vorzugsweise bedeutet R' eine Gruppe -(CH₂)̵ₖ mit k = 1 bis 12. Bedeutet R' eine Gruppe der Formel III, so ist diese vorzugsweise in 4,4'-Stellung gebunden.

R' kann in der Bedeutung einer Arylengruppe mit 6-10 C-Atomen z.B. eine m-Phenylen-, p-Phenylen-, 1,3-Naphthylen-, 1,4-Naphthylen-, 1,5-Naphthylen- oder 2,6-Naphthylengruppe bedeuten.

Wenn R' eine Gruppe der Formel III bedeutet, steht T vorzugsweise für die Methylengruppe, O oder SO₂.

Bedeutet R' Cycloalkylen mit 5-10 C-Atomen, kann dieser Rest mono- oder auch bicyclisch sein, wie z.B. Cyclopentylen, Cyclohexylen, Cycloheptylen, Cyclooctylen, Decalinylen, Bicyclohexylen, Bicycloheptylen, Bicyclooctylen usw.

Bevorzugt werden Verbindungen der Formel II, worin o die Zahl 1 und R³ Wasserstoff, Alkyl mit 1-4 C-Atomen, Alkenyl mit 2-4 C-Atomen, -NHR⁴ oder -OR⁴ bedeuten, sowie jene, worin R' (̵CH₂)̵ₚ mit p = 1-12, Cyclopentylen, Cyclohexylen, o-, m- oder p-Phenylen oder Naphthylen ist. Besonders bevorzugt werden Verbindungen der Formel II, worin R' -CH₂- oder p-Phenylen bedeutet. Ganz besonders bevorzugte Verbindungen der Formel II sind 4,4'-Diallyloxydibenzalaceton, 4,4'-Dimethoxydibenzalaceton und insbesondere Dibenzalaceton.

Das Mengenverhältnis der Komponenten (a) und (b) der erfindungsgemässen Stoffgemische wird vorzugsweise so gewählt, dass pro Mol des Benzaldehyd-Derivats (b) 0,5-10, insbesondere 1-5 Mol des ungesättigten Imids (a) eingesetzt werden.

Die erfindungsgemässen Stoffgemische können, falls zweckmässig, zusätzlich zu den Komponenten (a) und (b) noch (c) 1 bis 50 Gew.%, vorzugsweise 5 bis 40 Gew.%, besonders bevorzugt 10 bis 30 Gew.%, bezogen auf die Summe von (a) und (b), mindestens einer zur Reaktion mit der Komponente (a) befähigten Verbindung enthalten. Es können dabei beliebige bekannte Verbindungen eingesetzt werden. Verbindungen, die mit ungesättigten Imiden reagieren können, sind zum Beispiel in der US-A-4,666,997 als Komponente (c) der Stoffgemische beschrieben. Besonders geeignet sind dabei Polyamine oder Polyole. Als Polyamine oder Polyole kommen z.B. Phenol- oder Kresolnovolake oder Verbindungen der Formel 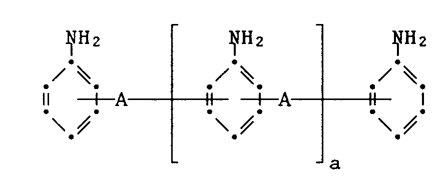
mit a gleich eine Zahl von 0,1 bis 2 und A gleich ein zweiwertiger Kohlenwasserstoffrest eines Aldehyds oder Ketons mit 1-8 C-Atomen erhalten nach Entfernung des Sauerstoffatoms.

Bevorzugte Komponenten (c) der erfindungsgemässen Stoffgemische sind Diamine oder Diole der Formel V

HQ-R''-QH (V),

mit Q gleich O oder NH, wobei R'' gleich -CₚH₂ₚ- mit p = 2-20, -CH₂CH₂SCH₂CH₂-, Arylen mit 6-10 C-Atomen, Xylylen, Cyclopentylen, Cyclohexylen, 1,4-Bis(methylen)cyclohexylen, einen zweiwertigen Rest des Bicyclohexylmethans oder Reste der Formeln 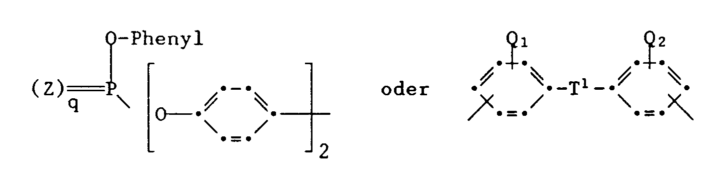
bedeutet,
wobei in den obigen Formeln T¹ Methylen, Isopropyliden, CO, O, S, SO₂, -P=O(Q₃), -NQ₃-, -N=N-, -CONH-, -COO-, -NQ₃-CO-X-CO-NQ₃-, -O-CO-X-CO-O-, 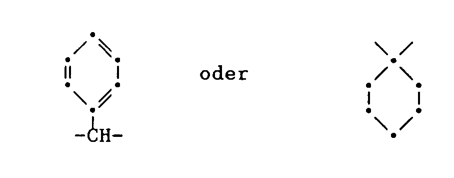
bedeutet,
q 0 oder 1 ist,
Z O oder S darstellt,
Q₁ und Q₂ unabhängig voneinander ein Halogenatom, Methyl, Ethyl oder ein Wasserstoffatom,
Q₃ C₁-C₄-Alkyl und
X eine direkte Bindung, -CₜH₂ₜ- mit t = 1-12, Arylen mit 6-10 C-Atomen, Xylylen, Cyclopentylen oder Cyclohexylen ist.

Als Diamine besonders geeignet sind aromatische Diamine, wie z.B. Phenylendiamin, Naphthylendiamin, Diaminobiphenyl oder Verbindungen der Formeln Va oder Vb 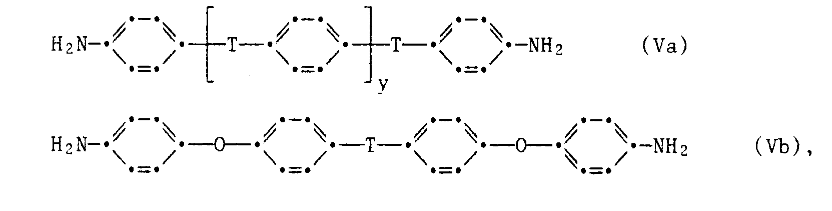
worin y Null bis 5 ist und T die oben angegebene Bedeutung hat. Unter den Verbindungen der Formel Va ist insbesondere 1,4-Bis(4'-aminophenoxy)benzol und unter Verbindungen der Formel Vb ist insbesondere jene mit T gleich Isopropyliden bevorzugt.

Bevorzugte Verbindungen (c) der erfindungsgemässen Stoffgemische sind auch Verbindungen der Formel VI 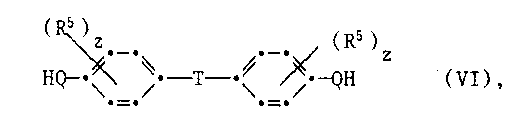
worin Q und T die oben angegebene Bedeutung haben, z Null oder eine ganze Zahl von 1 bis 4, insbesondere Null oder 1, ist und R⁵ ein C₁-C₄-Alkyl- ein C₂-C₄-Alkenylrest, oder ein Halogenatom ist.

Die als R⁴ beispielhaft erwähnten Alkyl- und Alkenylreste kommen auch als die entsprechenden Reste R⁵ in Frage. Wenn R⁵ einen Halogenatom bedeutet, ist es vorzugsweise Chlor oder insbesondere Brom, und das Symbol z in Formel VI bedeutet dann vorzugsweise 2 oder 4.

Besonders bevorzugte Verbindungen (c) sind Verbindungen der Formel VIa 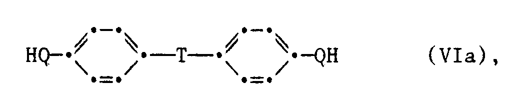
und under den Diphenolen besonders bevorzugt sind Verbindungen der Formel VII 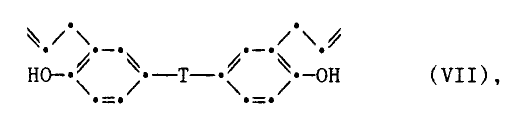
wobei Q und T in den Formeln VIa und VII die oben angegebene Bedeutung haben. Beispiele für Verbindungen der Formel VII sind: Bis(4-hydroxy-3-allyl)biphenyl, Bis(4-hydroxy-3-allylphenyl)methan und 2,2-Bis(4-hydroxy-3-allylphenyl)propan.

Die am meisten bevorzugten Verbindungen (c) sind 4,4'-Diaminodiphenylmethan und 2,2-Bis(4-hydroxy-3-allylphenyl)propan (o,o'-Diallylbisphenol A).

Bei den Komponenten (a), (b) und gegebenenfalls (c) der erfindungsgemässen Stoffgemische kann es sich jeweils um Einzelverbindungen oder um Gemische von zwei oder mehreren definitionsgemässen Verbindungen handeln.

Die definitionsgemässen Komponenten (a), (b) und (c) der erfindungsgemässen Stoffgemische sind bekannt und können auf bekannte Weise hergestellt werden.

Die Benzaldehyd-Derivate der Formel II können z.B. durch Umsetzung eines gegebenenfalls substituierten Benzaldehyds der Formel VIII 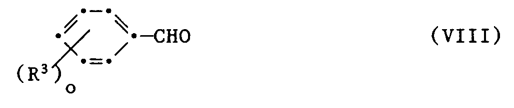
mit Aceton oder mit einem Acetylgruppen enthaltenden Diketon der Formel IX 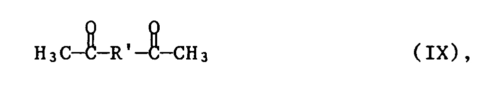
wobei o, R³ und R' die oben angegebene Bedeutung haben, hergestellt werden. Geeignete Verbindungen der Formel IX sind z.B. Acetylaceton oder insbesondere 4-Acetylacetophenon. Die Herstellung von Dibenzalaceton ist z.B. in Org. Synthesis Coll. Vol. II, 167 beschrieben. Auf analoge Weise können auch die anderen definitionsgemässen Verbindungen der Formel II hergestellt werden.

Die erfindungsgemässen Stoffgemische eignen sich für die Herstellung von Polymeren mit ausgezeichneten physikalischen Eigenschaften. Die Stoffgemische zeichnen sich zudem durch eine niedrige Viskosität und eine lange Topfzeit aus und sind daher leicht verarbeitbar.

Ein weiterer Gegenstand der Erfindung sind Polymere, die dadurch erhältlich sind, dass man ein erfindungsgemässes Stoffgemisch während 1 bis 20 Stunden auf eine Temperatur zwischen 100 und 300°C erhitzt.

Die Härtung bzw. Verarbeitung der Stoffgemische kann in einem inerten organischen Lösungsmittel, vorzugsweise jedoch aus der Schmelze und gegebenenfalls in Gegenwart eines Härtungskatalysators erfolgen. Als inerte organische Lösungsmittel eignen sich z.B. Dimethylformamid, Dimethylacetamid, N-Methylpyrrolidon, Toluol, Xylole, Methylenchlorid, Tetrahydrofuran, Methylethylketon, und Ethylenglykolmonoalkyl- oder -dialkylether mit 1-4 C-Atomen in den Alkylgruppen. Je nach der beabsichtigten Verwendung kommen als Härtungskatalysatoren z.B. organische Peroxide, wie Di-tert-butylperoxid, Dicumylperoxid, tert-Butylperbenzoat, oder basische Katalysatoren, vor allem primäre, sekundäre und tertiäre Amine in Betracht, wie z.B. Diethylamin, Tributylamin, Triethylamin, Benzylamin, N,N,N',N'-Tetramethyl-4,4'-diaminodiphenylmethan, N,N-Diisobutylaminoacetonitril, N,N-Dibutylaminoacetonitril und heterocyclische Basen, wie Chinolin, N-Methylpyrrolidin und Imidazol. Besonders bei der Verwendung von Phenolen oder Polyolen als zusätzliche, zur Reaktion mit den Maleinimidgruppen befähigte Komponente der erfindungsgemässen Stoffgemische empfiehlt sich der Zusatz von basischen Katalysatoren der erwähnten Art. Die Härtung wird im allgemeinen bei Temperaturen zwischen 100 und 300°C, besonders 120 und 250°C vorgenommen.

Die erfindungsgemässen Stoffgemische stellen niederschmelzende Festharze bis viskose Flüssigharze dar und zeichnen sich durch hohe Reaktivität und gute mechanische und thermische Eigenschaften der damit gehärteten Produkte aus, wie insbesondere eine gute Thermostabilität und Wärmealterungsbeständigkeit. So erhaltene Produkte weisen hohe Glasumwandlungstemperaturen und eine sehr hohe thermische Beständigkeit auf und sind zudem auch wenig spröde. Die erfindungsgemässen Stoffgemische können ferner leicht aus der Schmelze, besonders auch ohne Zusatz von schwerflüchtigen Lösungsmitteln, appliziert werden, beispielsweise zum Imprägnieren von Glasfaser-, Kohlenstoffaser- oder Aramidfaser-Gewebe, wie Fasergewebe aus den unter dem Handelsnamen Kevlar® bekannten Poly(1,4-phenylenterephthalamiden).

Die erfindungsgemässen Stoffgemische können vielseitig angewendet werden, z.B. als Laminier- oder Elektroharze, als Hochtemperatur-Klebstoffe oder zur Herstellung von Beschichtungen oder Formkörpern. Ganz besonders geeignet sind sie für die Herstellung von Prepregs und hitzebeständigen Verbundswerkstoffen, sowie als Laminierharze, als Wickelharze für das Filament-Winding-Verfahren oder als Hochtemperatur-Klebstoffe.

Gegenstand der Erfindung ist auch die Verwendung der erfindungsgemässen Stoffgemische zur Herstellung von Formkörpern, Prepregs, Laminaten, Beschichtungen oder Verklebungen.

Die Erfindung wird durch die folgenden Beispiele näher erläutert.

### Beispiel 1:

117,2 g Dibenzalaceton, hergestellt gemäss Org. Synth. Coll. Vol. II, 167 (0,5 mol) werden auf 140°C erwärmt und dann werden unter Rühren 179,2 g N,N',4,4'-Diphenylmethanbismaleinimid (0,5 mol) zugegeben. Nach etwa 10-15 Minuten ist das Bismaleinimid völlig aufgeschmolzen und die Mischung ist klar. Bei der Differentialthermoanalyse (System TA 2000 der Fa. Mettler AG, Greifensee, CH) zeigt das Gemisch einen Reaktionsbeginn T_{A} bei 140°C und ein Reaktionsmaximum Tₘₐₓ bei 204°C. Die integrale Reaktionswärme ΔH der Härtung beträgt 275 kJ/kg. Die Mischung wird während 20 Minuten bei ca. 120°C entgast und anschliessend in Formen von 120 x 120 x 4 mm³ gegossen. In einem Ofen werden die Prüfkörper 4 Stunden bei 150°C, 2 Stunden bei 200°C und 6 Stunden bei 250°C gehärtet. Nach dem Abkühlen zerschneidet man die Platte zu Prüfstäben, an deren folgende Eigenschaften gemessen werden:

| | |
|---|---|
| Biegfestigkeit nach ISO 178 | 49,8 N/mm² |
| Randfaserdehnung nach ISO 178 | 1,5% |
| Glaswandlungstemperatur¹ | > 300°C |
| 10% Gewichtsverlust bei² | 395°C |
| Zugscherfestigkeit nach ISO 4587 | 6,7 N/mm² |

| | |
|---|---|
| ¹ gemessen mittels TMA, Du Pont 9900 Thermal Analyser | |
| ² Messungen durch Aufheizen einer Probe im TA 3000 (Differentialthermoanalysesystem der Firma Mettler); Ermittlung der Temperatur, bei der 10% der Probe verflüchtigt sind; Aufheizgeschwindigkeit: 10°C/min (in Luft). | |

### Beispiele 2-4:

Nach dem in Beispiel 1 beschriebenen Verfahren werden weitere Gemische aus Dibenzalaceton und N,N',4,4'-Diphenylmethanbismaleinimid hergestellt und zu Formkörpern verarbeitet. Die Eigenschaften der Gemische und der gehärteten Produkte werden wie in Beispiel 1 angegeben bestimmt. Die Resultate sind in Tabelle 1 zusammengefasst:

**Tabelle 1**

| Beispiel Nr. | 2 | 3 | 4 |
|---|---|---|---|
| Dibenzalaceton | 87,9 g | 58,6 g | 29,3 g |
| N,N',4,4'-Diphenylmethanbismaleinimid | 179,2 g | 179,2 g | 179,2 g |
| T_{A} (°C) | 150 | 155 | 160 |
| Tₘₐₓ (°C) | 199 | 201 | 199 |
| ΔH (kJ/kg) | 240 | 220 | 170 |
| Biegefestigkeit (N/mm²) | 47 | 50 | 40 |
| Randfaserdehnung (%) | 1,4 | 1,5 | 1,1 |
| Glasumwandlungstemperatur (°C) | > 300 | > 300 | > 300 |
| 10 % Gewichtsverlust bei (°C) | 415 | 430 | 465 |
| Zugscherfestigkeit (N/mm²) | 7,4 | 6,8 | 6,8 |

### Beispiel 5:

Nach dem in Beispiel 1 beschriebenen Verfahren wird eine Mischung aus 88,2 g 4,4'-Dimethoxy-dibenzalaceton (0,3 mol) hergestellt gemäss Berichte der Deutschen Chemischen Gesellschaft 35, 1192 und 107,4 g N,N',4,4'-Diphenylmethanbismaleinimid (0,3 mol) hergestellt, zu Platten vergossen und 2 Stunden bei 120°C, 2 Stunden bei 150°C, 1 Stunde bei 200°C und 6 Stunden bei 250°C gehärtet. Folgende Eigenschaften werden gemessen:

| | |
|---|---|
| Biegefestigkeit | 71 N/mm² |
| Randfaserdehnung | 1,9 % |
| Glasumwandlungstemperatur | > 300°C |
| 10 % Gewichtsverlust bei | 380°C |

### Beispiel 6:

Nach dem in Beispiel 1 beschriebenen Verfahren wird eine Mischung aus 103,8 g 4,4'-Diallyloxydibenzalaceton (0,3 mol) hergestellt gemäss Org. Synth. Coll. Vol. II, 167 aus p-Allyloxybenzaldehyd und Aceton und 107,4 g N,N',4,4'-Diphenylmethanbismaleinimid (0,3 mol) hergestellt, zu Platten gegossen und 2 Stunden bei 120°C, 2 Stunden bei 150°C, 1 Stunde bei 200°C und 6 Stunden bei 250°C gehärtet. Folgende Eigenschaften werden gemessen:

| | |
|---|---|
| Biegefestigkeit | 41 N/mm² |
| Randfaserdehnung | 1,3 % |
| Glasumwandlungstemperatur | > 300°C |
| 10 % Gewichtsverlust bei | 425°C |

### Beispiel 7:

23,4 g Dibenzalaceton (0,1 mol) werden auf 140°C erwärmt und dann werden unter Rühren 143,2 g N,N',4,4'-Diphenylmethanbismaleinimid (0,4 mol) zugegeben. Nach etwa 20 Minuten ist das Bismaleinimid völlig aufgeschmolzen. In dieser Schmelze löst man dann bei 120°C 39,6 g (0,2 mol) 4,4'-Diaminodiphenylmethan. Die klare Mischung wird anschliessend bei 120°C entgast, dann in Formen von 120 x 120 x 4 mm gegossen und im Ofen 2 Stunden bei 120°C, 2 Stunden bei 150°C, 1 Stunde bei 200°C und 6 Stunden bei 250°C gehärtet. Folgende Eigenschaften werden wie im Beispiel 1 angegeben gemessen:

| | |
|---|---|
| Biegefestigkeit | 150 N/mm² |
| Randfaserdehnung | 6,2 % |
| Schlagzähigkeit nach ISO 179 | 16,2 kJ/m² |
| Glasumwandlungstemperatur | 297°C |
| Zugscherfestigkeit | 12,2 N/mm² |
| 10 % Gewichtsverlust bei | 405°C |

### Beispiele 8-10:

Eine Mischung aus N,N',4,4'-Diphenylmethanbismaleinimid, Dibenzalaceton und o,o'-Diallylbisphenol A wird bei 150°C aufgeschmolzen. Die klare Schmelze wird während 10 Minuten bei 150°C entgast, dann in eine Form von 120 x 120 x 4 mm³ gegossen und 2 Stunden bei 160°C, 1 Stunde bei 180°C, 1 Stunde bei 200°C und 6 Stunden bei 250°C gehärtet. Nach dem Abkühlen wird die Platte zu Prüfstäben zerschnitten. Die Resultate sind in Tabelle 2 zusammengefasst:

**Tabelle 2**

| Beispiel Nr. | 8 | 9 | 10 |
|---|---|---|---|
| N,N',4,4'-Diphenylmethanbismaleinimid | 89,6 g | 89,6 g | 89,6 g |
| Dibenzalaceton | 11,7 g | 23,4 g | 35,1 g |
| o,o'-Diallylbisphenol A | 38,6 g | 38,6 g | 38,6 g |
| Viskosität bei 120°C | 120 | 80 | 70 |
| (m Pa.s) bei 80°C | - | 2900 | 1700 |
| Gelierzeit bei 160°C (min) | 120 | 120 | 120 |
| Glasumwandlungstemperatur (°C) | 314 | 307 | 299 |
| Biegefestigkeit (N/mm²) | 153 | 149 | 135 |
| Randfaserdehnung (%) | 5,6 | 5,5 | 4,6 |
| Schlagzähigkeit (kJ/m²) | 23,0 | 21,4 | 19,8 |
| 10 % Gewichtsverlust bei (°C) | 410 | 395 | 385 |

## Patentansprüche

1. Heisshärtbare Stoffgemische enthaltend (a) ein ungesättigtes Imid der Formel I 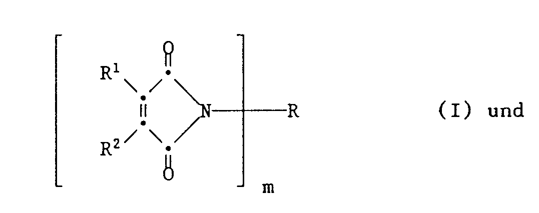 (b) ein Benzaldehyd-Derivat der Formel II 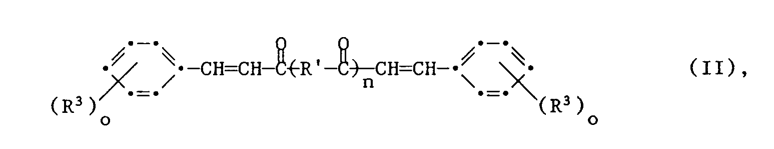 worin m 2 oder 3, n Null oder 1 und o eine ganze Zahl von 1 bis 5 bedeuten,
R¹ und R² unabhängig voneinander Wasserstoff oder Methyl sind,
R -CₚH₂ₚ- mit p = 2-20, -CH₂CH₂SCH₂CH₂-, Arylen mit 6-10 C-Atomen, Xylylen, Cyclopentylen, Cyclohexylen, 1,4-Bis(methylen)cyclohexylen, einen zweiwertigen Rest des Bicyclohexylmethans oder Reste der Formeln 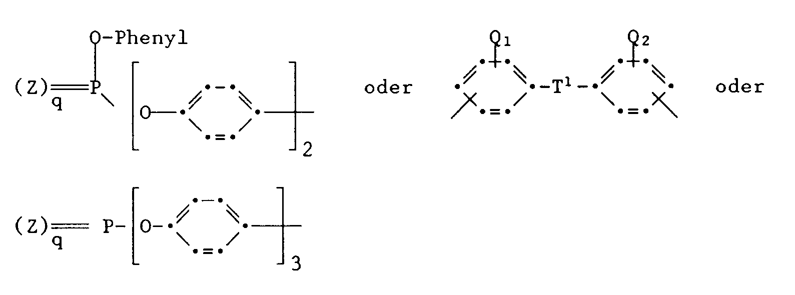 bedeutet, wobei
in den obigen Formeln T¹ Methylen, Isopropyliden, CO, O, S, SO₂, -P=O(Q₃), -NQ₃-, -N=N-, -CONH-, -COO-, -NQ₃-CO-X-CO-NQ₃-, -O-CO-X-CO-O-, 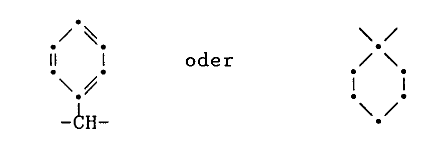 bedeutet,
q 0 oder 1 ist,
Z O oder S darstellt,
Q₁ und Q₂ unabhängig voneinander ein Halogenatom, Methyl, Ethyl oder ein Wasserstoffatom,
Q₃ C₁-C₄-Alkyl und
X eine direkte Bindung, -CₜH₂ₜ- mit t = 1-12, Arylen mit 6-10 C-Atomen, Xylylen, Cyclopentylen oder Cyclohexylen ist,
R' -CₖH₂ₖ- mit k = 1-20, Cycloalkylen mit 5-10 C-Atomen, Arylen mit 6-10 C-Atomen oder eine Gruppe der Formel III 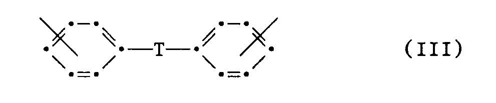 mit T = eine direkte Bindung, Methylen, Isopropyliden, CO, O oder SO₂ und die Substituenten R³ unabhängig voneinander Wasserstoff, Alkyl mit 1-12 C-Atomen, Alkenyl mit 2-6 C-Atomen, Cycloalkyl mit 5-8 C-Atomen, Phenyl, Halogen, eine Nitrogruppe oder eine Gruppe -N(R⁴)₂ oder -OR⁴ bedeuten, wobei die Substituenten R⁴ unabhängig voneinander Wasserstoff, C₁-C₄-Alkyl, C₂-C₄-Alkenyl oder 2,3-Epoxypropyl bedeuten.

2. Stoffgemisch nach Anspruch 1, worin R¹, R² und R³ Wasserstoffatome bedeuten.

3. Stoffgemisch nach Anspruch 1, worin m die Zahl 2, und R -(CH₂)̵ₚ mit p = 2-12, m- oder p-Phenylen, m- oder p-Xylylen, 1,4-Cyclohexylen, 1,4-Bis(methylen)cyclohexylen, den Rest des 4,4'-Bicyclohexylmethans oder einen Rest der Formel IV 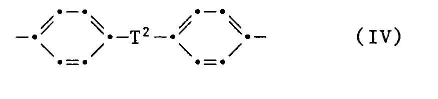 bedeuten, worin T² O, CH₂ oder SO₂ darstellt.

4. Stoffgemisch nach Anspruch 1, das als Verbindung (a) N,N',4,4'-Diphenylmethanbismaleinimid enthält.

5. Stoffgemisch nach Anspruch 1, worin o die Zahl 1 und R³ Wasserstoff, Alkyl mit 1-4 C-Atomen, Alkenyl mit 2-4 C-Atomen, -NHR⁴ oder -OR⁴ bedeuten.

6. Stoffgemisch nach Anspruch 1, worin R' (̵CH₂)̵ₖ mit k = 1-12, Cyclopentylen, Cyclohexylen, o-, m- oder p-Phenylen oder Naphthylen ist.

7. Stoffgemisch nach Anspruch 1, worin R' -CH₂- oder p-Phenylen bedeutet.

8. Stoffgemisch nach Anspruch 1, worin die Verbindung (b) 4,4'-Diallyloxydibenzalaceton, 4,4'-Dimethoxydibenzalaceton oder Dibenzalaceton ist.

9. Stoffgemisch nach Anspruch 1, das pro Mol der Komponente (b) 0,5-10 Mol der Komponente (a) enthält.

10. Stoffgemisch nach Anspruch 1, das zusätzlich zu den Komponenten (a) und (b) noch (c) 1 bis 50 Gew.%, bezogen auf die Summe von (a) und (b), eines Polyamins oder eines Polyols enthält.

11. Stoffgemisch nach Anspruch 10, worin die Komponente (c) ein Diamin oder Diol der Formel V
HQ-R''-QH (V),
ist mit Q gleich O oder NH und R'' -CₚH₂ₚ- mit p = 2-20, -CH₂CH₂SCH₂CH₂-, Arylen mit 6-10 C-Atomen, Xylylen, Cyclopentylen, Cyclohexylen, 1,4-Bis(methylen)cyclohexylen, einen zweiwertigen Rest des Bicyclohexylmethans oder Reste der Formeln 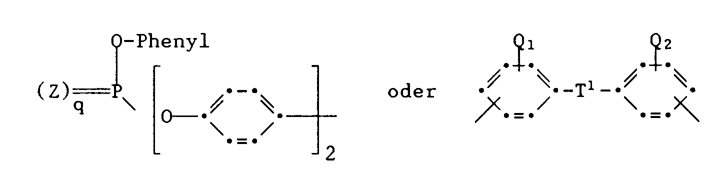 bedeutet,
wobei in den obigen Formeln T¹ Methylen, Isopropyliden, CO, O, S, SO₂, -P=O(Q₃), -NQ₃-, -N=N-, -CONH-, -COO-, -NQ₃-CO-X-CO-NO₃-, -O-CO-X-CO-O-, 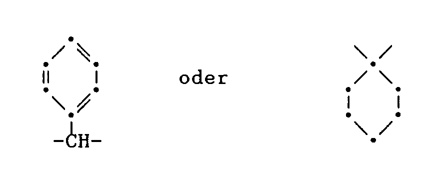 bedeutet,
q 0 oder 1 ist,
Z O oder S darstellt,
Q₁ und Q₂ unabhängig voneinander ein Halogenatom, Methyl, Ethyl oder ein Wasserstoffatom,
Q₃ C₁-C₄-Alkyl und
X eine direkte Bindung, -CₜH₂ₜ- mit t = 1-12, Arylen mit 6-10 C-Atomen, Xylylen, Cyclopentylen oder Cyclohexylen ist.

12. Stoffgemisch nach Anspruch 11, worin (c) eine Verbindungen der Formel VIa 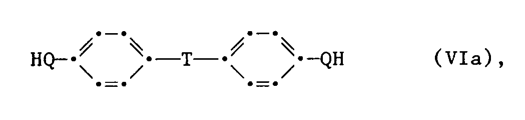 mit T gleich eine direkte Bindung, Methylen, Isopropyliden, CO, O oder SO₂ ist.

13. Stoffgemisch nach Anspruch 11, worin (c) eine Verbindung der Formel VII 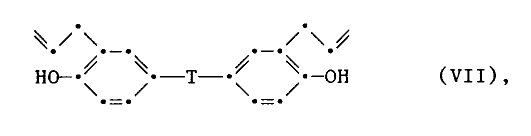 ist, und T die im Anspruch 12 angegebene Bedeutung hat.

14. Stoffgemisch nach Anspruch 12 oder 13, worin (c) 4,4'-Diaminodiphenylmethan oder 2,2-Bis(4-hydroxy-3-allylphenyl)propan ist.

15. Verwendung des Stoffgemisches nach Anspruch 1 zur Herstellung von Formkörpern, Prepregs, Laminaten, Beschichtungen oder Verklebungen.

16. Polymere, die dadurch erhältlich sind, dass man ein Stoffgemisch nach Anspruch 1 während 1-20 Stunden auf eine Temperatur zwischen 100 und 300°C erhitzt.

## Claims

1. A hot-curable composition of matter comprising (a) an unsaturated imide of the formula I 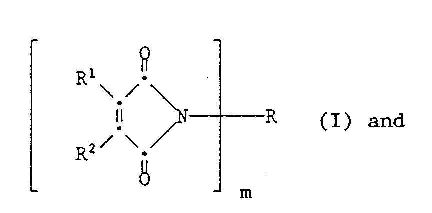 (b) a benzaldehyde derivative of the formula II 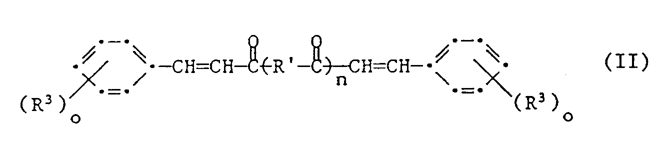 in which m is 2 or 3, n is zero or 1 and o is a whole number from 1 to 5, R¹ and R² independently of one another are hydrogen or methyl, R is -CₚH₂ₚ- where p = 2-20, -CH₂CH₂SCH₂CH₂-, arylene having 6-10 C atoms, xylylene, cyclopentylene, cyclohexylene, 1,4-bis(methylene)cyclohexylene, a divalent radical of bicyclohexylmethane or a radical of the formula 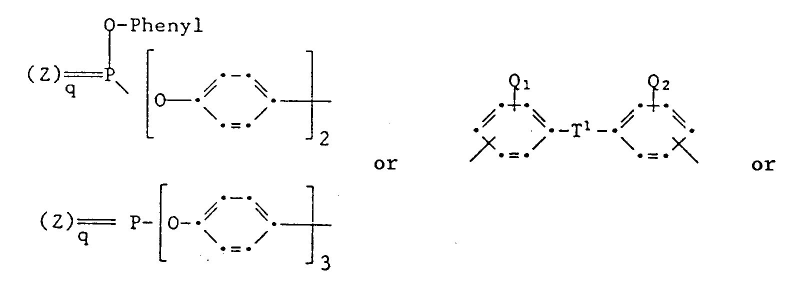 where T¹ in the above formulae is methylene, isopropylidene, CO, O, S, SO₂, -P=O(Q₃), -NQ₃-, -N=N-, -CONH-, -COO-, -NQ₃-CO-X-CO-NQ₃-, -O-CO-X-CO-O-, 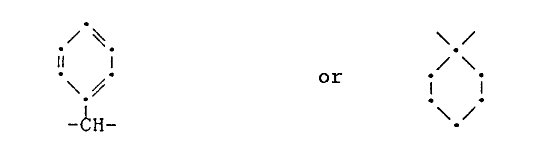 q is 0 or 1, Z is O or S, Q₁ and Q₂ independently of one another are a halogen atom, methyl, ethyl or a hydrogen atom, Q₃ is C₁-C₄alkyl and X is a direct bond, -CₜH₂ₜ- where t = 1-12, arylene having 6-10 C atoms, xylylene, cyclopentylene or cyclohexylene, R' is -CₖH₂ₖ- where k = 1-20, cycloalkylene having 5-10 C atoms, arylene having 6-10 C atoms or a group of the formula III 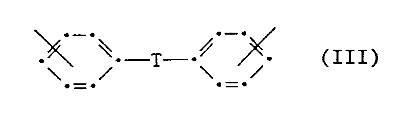 in which T is a direct bond, methylene, isopropylidene, CO, O or SO₂ and the substituents R³ independently of one another are hydrogen, alkyl having 1-12 C atoms, alkenyl having 2-6 C atoms, cycloalkyl having 5-8 C atoms, phenyl, halogen, a nitro group or is a group -N(R⁴)₂ or -OR⁴, the substituents R⁴ independently of one another being hydrogen, C₁-C₄alkyl, C₂-C₄alkenyl or 2,3-epoxypropyl.

2. A composition of matter according to claim 1, in which R¹, R² and R³ are hydrogen atoms.

3. A composition of matter according to claim 1, in which m is the number 2 and R is -(CH₂-)p where p = 2-12, m- or p-phenylene, m- or p-xylylene, 1,4-cyclohexylene, 1,4-bis(methylene)cyclohexylene, or is the radical of 4,4'-bicylcohexylmethane or a radical of the formula IV 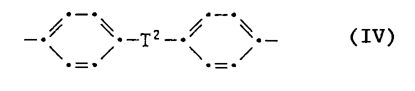 in which T² is O, CH₂ or SO₂.

4. A composition of matter according to claim 1, comprising gas compound (a) N,N',4,4'-diphenylmethanebismaleimide.

5. A composition of matter according to claim 1, in which o is the number 1 and R³ is hydrogen, alkyl having 1-4 C atoms, alkenyl having 2-4 C atoms, -NHR⁴ or -OR⁴.

6. A composition of matter according to claim 1, in which R' is -(CH₂-)ₖ where k = 1-12, cyclopentylene, cyclohexylene, o-, m- or p-phenylene or naphthylene.

7. A composition of matter according to claim 1, in which R' is -CH₂- or p-phenylene.

8. A composition of matter according to claim 1, in which compound (b) is 4,4'-diallyloxydibenzalacetone, 4,4'-dimethoxydibenzalacetone or dibenzalacetone.

9. A composition of matter according to claim 1, comprising 0.5-10 mol of component (a) per mole of component (b).

10. A composition of matter according to claim 1, comprising in addition to components (a) and (b) also (c) 1 to 50% by weight, based on the sum of (a) and (b), of a polyamine or a polyol.

11. A composition of matter according to claim 10, in which component (c) is a diamine or diol of the formula V
HQ-R''-QH (V),
where Q is O or NH and R'' is -CₚH₂ₚ- where p = 2-20, -CH₂CH₂SCH₂CH₂-, arylene having 6-10 C atoms, xylylene, cyclopentylene, cyclohexylene, 1,4-bis(methylene)cyclohexylene, a divalent radical of bicyclohexylmethane or a radical of the formula 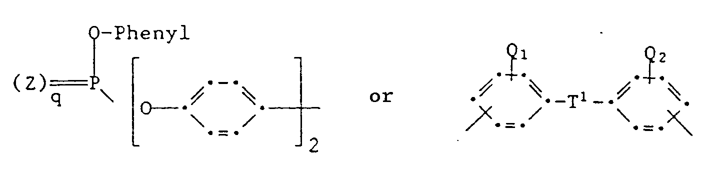 where T¹ in the above formulae is methylene, isopropylidene, CO, O, S, SO₂, -P=O(Q₃), -NQ₃-, -N=N-, -CONH-, -COO-, -NQ₃-CO-X-CO-NQ₃-, -O-CO-X-CO-O-, 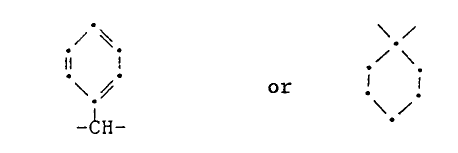 q is 0 or 1, Z is O or S, Q₁ and Q₂ independently of one another are a halogen atom, methyl, ethyl or a hydrogen atom, Q₃ is C₁-C₄alkyl and X is a direct bond, -Cₜ-H₂ₜ- where t = 1-12, arylene having 6-10 C atoms, xylylene, cyclopentylene or cyclohexylene.

12. A composition of matter according to claim 11, in which (c) is a compound of the formula VIa 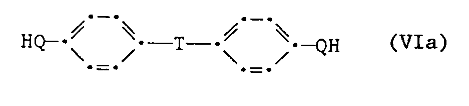 where T is a direct bond, methylene, isopropylidene, CO, O or SO₂.

13. A composition of matter according to claim 11, in which (c) is a compound of the formula VII 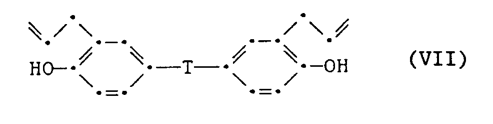 and T is as defined in claim 12.

14. A composition of matter according to claim 12 or 13, in which (c) is 4,4'-diaminodiphenylmethane or 2,2-bis(4-hydroxy-3-allylphenyl)propane.

15. Use of the composition of matter according to claim 1 for the production of mouldings, prepregs, laminates, coatings or bonded products.

16. Polymers obtainable by heating a composition of matter according to claim 1 to a temperature between 100 and 300°C for 1-20 hours.

## Revendications

1. Mélanges thermodurcissables contienant :
(a) un imide insaturé répondant à la formule I : 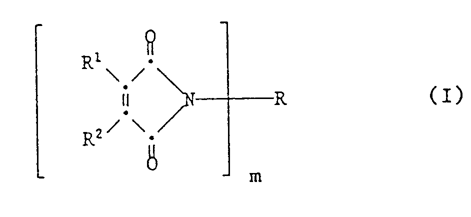 et
(b) un dérivé du benzaldéhyde répondant à la formule II : 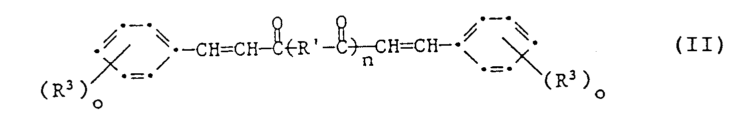
formules dans lesquelles :
m est égal à 2 ou à 3,
n est égal à 0 ou à 1,
o désigne un nombre entier de 1 à 5,
R¹ et R² représentent chacun, indépendamment l'un de l'autre, l'hydrogène ou un méthyle,
R représente un radical -CₚH₂ₚ- dans lequel p désigne un nombre de 2 à 20, un radical -CH₂CH₂SCH₂CH₂-, un arylène contenant de 6 à 10 atomes de carbone, un xylylène, un cyclopentylène, un cyclohexylène, un 1,4-bis-(méthylène)-cyclohexylène, un radical divalent du dicyclohexyl-méthane ou un radical répondant à l'une des formules : 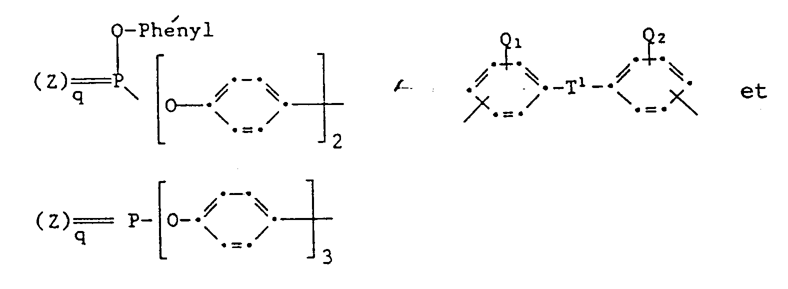 dans lesquelles :
T¹ représente un méthylène, un isopropylidène, CO, O, S, SO₂, -P=O(Q₃)-, -NQ₃-, -N=N-, -CONH-, -COO-, -NQ₃-CO-X-CO-NQ₃-, -O-CO-X-CO-O-, 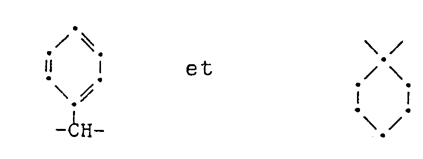
q est égal à 0 ou à 1,
Z représente O ou S,
Q₁ et Q₂ représentent chacun, indépendamment l'un de l'autre, un atome d'halogène, un méthyle, un éthyle ou un atome d'hydrogène,
Q₃ représente un alkyle en C₁-C₄ et
X représente une liaison directe, un radical -CₜH₂ₜ-dans lequel t désigne un nombre de 1 à 12, un arylène contenant de 6 à 10 atomes de carbone, un xylylène, un cyclopentylène ou un cyclohexylène,
R' représente un radical -CₖH₂ₖ- dans lequel k désigne un nombre de 1 à 20, un cycloalkylène contenant de 5 à 10 atomes de carbone, un arylène contenant de 6 à 10 atomes de carbone ou un radical de formule III : 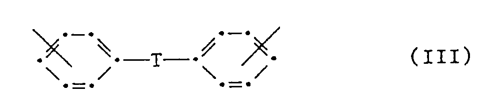 dans lequel T représente une liaison directe, un méthylène, un isopropylidène, CO, O ou SO₂, et
les R³ représentent chacun, indépendamment l'un de l'autre, l'hydrogène, un alkyle contenant de 1 à 12 atomes de carbone, un alcényle contenant de 2 à 6 atomes de carbone, un cycloalkyle contenant de 5 à 8 atomes de carbone, un phényle, un halogène, un nitro ou un radical -N (R⁴) 2 ou -OR⁴, les R⁴ représentant chacun, indépendamment l'un de l'autre, l'hydrogène, un alkyle en C₁-C₄, un alcényle en C₂-C₄ ou un 2,3-époxy-propyle.

2. Mélanges selon la revendication 1 dans lesquels R¹, R² et R³représentent chacun un atome d'hydrogène.

3. Mélanges selon la revendication 1 dans lesquels m est égal à 2 et R représente un radical -(CH₂)ₚ- dont l'indice p désigne un nombre de 2 à 12, un radical m- ou p-phénylène, un radical m- ou p-xylylène, un radical 1,4-cyclohexylène, un radical 1,4-bis-(méthylène)-cyclohexylène, le radical du 4,4'-dicyclohexyl-méthane ou un radical répondant à la formule IV : 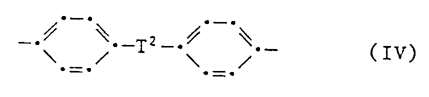 dans laquelle T₂ représente O, CH₂ ou SO₂.

4. Mélanges selon la revendication 1 qui contiennent, comme composé (a), le N,N'-4,4'-diphénylméthane-bis-maléimide.

5. Mélanges selon la revendication 1 dans lesquels o est égal à 1 et R³ représentent l'hydrogène, un alkyle en C₁-C₄, un alcényle en C₂-C₄ ou un radical -NHR⁴ ou -OR⁴.

6. Mélanges selon la revendication 1 dans lesquels R' représente un radical -(CH₂)ₖ- dont l'indice k désigne un nombre de 1 à 12, un cyclopentylène, un cyclohexylène, un radical o-, m- ou p-phénylène ou un naphtylène.

7. Mélanges selon la revendication 1 dans lesquels R' représente -CH₂- ou un radical p-phénylène.

8. Mélanges selon la revendication 1 dans lesquels le composé (b) est la 4,4'-diallyloxy-dibenzylidène-acétone, la 4,4'-diméthoxy-dibenzylidène-acétone ou la dibenzylidène-acétone.

9. Mélanges selon la revendication 1 qui contiennent, par mole de la composante (b), de 0,5 à 10 mol de la composante (a).

10. Mélanges selon la revendication 1 qui, en plus des composantes (a) et (b), contiennent (c) de 1 à 50% en poids, par rapport à la somme de (a) et (b), d'une polyamine ou d'un polyol.

11. Mélanges selon la revendication 10 dans lesquels la composante (c) est une diamine ou un diol répondant à la formule V :
HQ-R''-QH (V)
dans laquelle Q représente O ou NH, et R'' représente un radical -CₚH₂ₚ- dont l'indice p désigne un nombre de 2 à 20, un radical -CH₂CH₂SCH₂CH₂-, un arylène en C₆-C₁₀, un xylylène, un cyclopentylène, un cyclohexylène, un 1,4-bis-(méthylène)-cyclohexylène, un radical divalent du dicyclohexyl-méthane ou un radical répondant à l'une des formules : 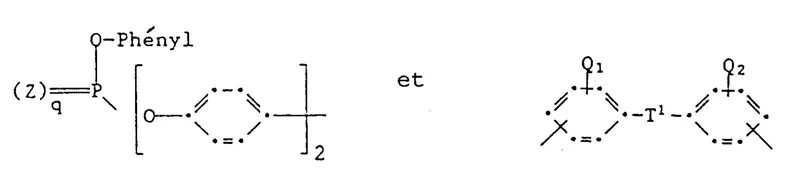 dans lesquelles :
T¹ représente un méthylène, un isopropylidène, CO, O, S, SO₂, -P=O(Q₃)=, -NQ₃-, -N=N-, -CONH-, -COO-, -NQ₃-CO-X-CO-NQ₃-, -O-CO-X-CO-O-, 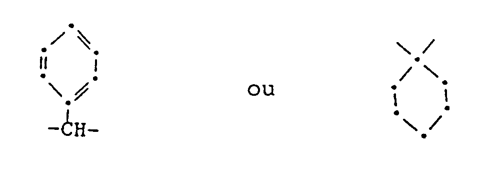
q est égal à 0 ou à 1,
Z représente O ou S,
Q₁ et Q₂ représentent chacun, indépendamment l'un de l'autre, un atome d'halogène, un méthyle, un éthyle ou un atome d'hydrogène,
Q₃ représente un alkyle en C₁-C₄ et
X représente une liaison directe, un radical -CₜH₂ₜ- dont l'indice t désigne un nombre de 1 à 12, un arylène en C₆-C₁₀, un xylylène, un cyclopentylène ou un cyclohexylène.

12. Mélanges selon la revendication 11 dans lesquels la composante (c) est un composé répondant à la formule VI a: 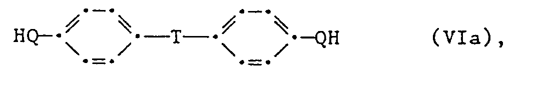 dans laquelle T représente une liaison directe ou un radical méthylène, isopropylidène, CO, O ou SO₂.

13. Mélanges selon la revendication 11 dans lesquels la composante (c) est un composé répondant à la formule VII : 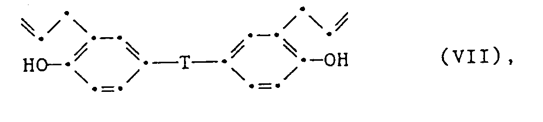 dans laquelle T a la signification qui lui a été donnée à la revendication 12.

14. Mélanges selon l'une des revendications 12 et 13, dans lesquels la composantes (c) est le 4,4'-diaminodiphénylméthane ou le 2,2-bis-(4-hydroxy-3-allyl-phényl)-propane.

15. Application des mélanges selon la revendication 1 à la fabrication d'objets moulés, de préimprégnés, de stratifiés, de revêtements ou de collages.

16. Polymères que l'on peut obtenir en chauffant un mélange selon la revendication 1, pendant 1 à 20 heures, à une température comprise entre 100 et 300°C.
